# EUROPEAN PATENT APPLICATION

(11) **EP 4 847 949 A1**
(43) Date of publication of application: **02.12.2026**
(21) Application number: 25754499.9
(22) Date of filing: 05.02.2025
(51) Int. Cl.: G01S 7/481, G01S 17/48, G01S 17/42, G01S 7/497

(54) **DETECTION DEVICE AND TERMINAL**

(30) Priority: 18.02.2024 CN 202410183068
(71) Applicant: Yinwang Intelligent Technologies Co., Ltd., Shenzhen, Guangdong 518110 (CN)
(72) Inventor: HE, Xin, Shenzhen, Guangdong 518129 (CN); SHI, Xianling, Shenzhen, Guangdong 518129 (CN)
(74) Representative: MERH-IP Matias Erny Reichl Hoffmann Patentanwälte PartG mbB
(86) International application number: PCT/CN2025/075753
(87) International publication number: WO 2025/171773

(57) **Abstract**

This application provides a detection apparatus and a terminal, and is applied to fields such as autonomous driving, surveying and mapping, and smart transportation. The detection apparatus includes a first emitting module, a second emitting module, a scanning module, and a first receiving module. The first emitting module is configured to generate a first emitted light beam at a first moment. The scanning module is configured to reflect the first emitted light beam at a first scanning angle to form a first reflected light beam. The first receiving module is configured to receive the first reflected light beam and obtain first detection data, and the first detection data may indicate the first scanning angle. The second emitting module is configured to generate a detection light beam at a second moment, and the second moment is related to the first moment and the first scanning angle. The detection light beam is reflected by the scanning module to object space for detection. The first emitting module, the first receiving module, and the scanning module have a specific angular relationship, so that an angle of the scanning module can be precisely detected, to accurately control an operation period of the second emitting module, thereby improving detection performance of the detection apparatus.

## Description

This application claims priority to Chinese Patent Application No. 202410183068.1, filed with the China National Intellectual Property Administration on February 18, 2024 and entitled "DETECTION APPARATUS AND TERMINAL", which is incorporated herein by reference in its entirety.

### TECHNICAL FIELD

This application relates to the field of detection technologies, and in particular, to a detection apparatus and a terminal.

### BACKGROUND

With the development of information technologies and computer vision, detection technologies have developed rapidly. Various detection apparatuses, such as lidars and radars, bring great convenience to people's lives and travel. A lidar is a distance detection device that uses a laser as an emission light source and adopts photoelectric detection technology. The lidar has advantages of small size, high measurement accuracy, and high ranging and angle accuracy, and is widely used in fields such as autonomous driving, surveying and mapping, and smart transportation.

A scanning lidar is a widely used lidar, which includes a movable scanning module. Under the action of the scanning module, laser beams emitted by a laser are projected onto different regions of a field of view at different angles, thereby performing detection on various regions of the field of view. Because the scanning module is in a continuous movement process, to improve detection accuracy and detection efficiency of the detection apparatus, an occasion for emitting a light beam needs to cooperate with scanning movement of the scanning module. Therefore, the detection apparatus needs to detect an angle of the scanning module, to control a detection process of the lidar.

Currently, in some solutions, an optical angle encoder is used to obtain a detection angle of the lidar. The optical angle encoder includes a photoelectric sensor and a code disk mounted on the scanning module. The code disk is of a circular structure, and an edge of the code disk is provided with a plurality of uniformly arranged small holes. Light beams emitted by a light source pass through the small holes on the code disk, and are projected onto the photoelectric sensor to generate electrical pulse signals. A quantity of electrical pulse signals reflects a rotation angle of the scanning module. It can be learned that the optical angle encoder depends on the code disk to generate the pulse signal, and a mounting environment of the lidar is complex. When there is moisture, condensation, dust, oil, or other contaminants accumulated on the code disk, light transmission performance of the small holes on the code disk may change. In this case, it is difficult for the pulse signal output by the optical angle encoder to accurately reflect a change of an angle, leading to a large jump in the angle output by the optical angle encoder. As a result, the angle detection becomes inaccurate, making it difficult to precisely control an operation period of the detection apparatus.

### SUMMARY

This application provides a detection apparatus and a terminal. The detection apparatus includes a scanning module, and an emitting terminal and a receiving terminal for detecting the scanning module. An optical path between the emitting terminal and the receiving terminal passes through a reflective surface of the scanning module, and the emitting terminal, the receiving terminal, and the scanning module have a specific angular relationship, so that an angle of the scanning module can be precisely detected, and an operation period of a second emitting module can be accurately controlled. In this way, angle accuracy of the detection apparatus is improved, control accuracy of the operation period of the detection apparatus is improved, and detection performance of the detection apparatus is improved.

According to a first aspect, this application provides a detection apparatus. The detection apparatus includes a first emitting module, a second emitting module, a scanning module, and a first receiving module. The first emitting module is configured to generate a first emitted light beam at a first moment. The scanning module is configured to reflect the first emitted light beam at a first scanning angle to form a first reflected light beam. The first receiving module is configured to receive the first reflected light beam and obtain first detection data, and the first detection data may indicate the first scanning angle. The second emitting module is configured to generate a detection light beam at a second moment, and the second moment is related to the first moment and the first scanning angle. The scanning module is further configured to reflect the detection light beam to object space, to detect the object space.

The second emitting module is a module configured to detect the object space, and time of emitting a signal by the second emitting module needs to match an angle of the scanning module to complete a detection task. In embodiments of this application, the detection apparatus is provided with the first emitting module and the first receiving module that are configured to detect the scanning module, so that an angular relationship in an optical path can exist among the first emitting module, the scanning module, and the first receiving module. In other words, when the scanning module is at the first scanning angle, a light beam emitted by the first emitting module may be received by the first receiving module after being reflected by the scanning module. Therefore, the detection data obtained by the first receiving module can indicate the first scanning angle, and the detection data also indicates a moment at which the first reflected light beam is received, thereby precisely determining an angle value of the scanning module. In this way, an occasion for emitting the detection light beam by the second emitting module can be controlled to coordinate with scanning movement of the scanning module, so that an angle corresponding to the detection light beam is controllable. In this way, an operation period of the second emitting module is accurately controlled, angle accuracy of the detection apparatus is improved, and detection performance of the detection apparatus is improved.

In a possible implementation of the first aspect, the detection apparatus further includes a calculation module, and the calculation module is configured to process data. For example, the calculation module is configured to process the first detection data.

In another possible implementation of the first aspect, the calculation module is configured to obtain a first frame signal based on the first detection data. The first frame signal indicates a first detection frame. The second emitting module is configured to send the detection light beam in the first detection frame, where the second moment is located in the first detection frame.

In another possible implementation of the first aspect, the calculation module is configured to obtain a first indication signal based on the first detection data, and update a level of the first frame signal based on the first indication signal. The first indication signal changes to a first level at a first time location, and the first time location corresponds to the first moment and the first scanning angle. The first frame signal indicates the first detection frame. The first level is, for example, a high level, and level ranges of the high level and a low level may be predefined.

In another possible implementation of the first aspect, in the first detection frame, an angle through which the detection light beam scans is a field of view (field of view, FOV) of the detection apparatus.

In another possible implementation of the first aspect, an amplitude value of the first detection data is positively correlated with intensity of light energy received by the first receiving module. When the amplitude value of the first detection data is greater than or equal to a first preset value, the first indication signal is at the first level. In this way, it may be determined through comparison between the amplitude value of the first detection data and the first preset value whether the first receiving module currently receives the first reflected light beam.

In another possible implementation of the first aspect, the detection apparatus further includes a second receiving module. The first emitting module is further configured to generate a second emitted light beam at a third moment. The scanning module is further configured to reflect the second emitted light beam at a third scanning angle, to form a second reflected light beam. The second receiving module is configured to receive the second reflected light beam and obtain second detection data, and the second detection data indicates the second scanning angle. The second emitting module stops generating the detection light beam at a fourth moment. The fourth moment is related to the third moment and the second scanning angle.

In the foregoing implementation, a plurality of receiving terminals may be disposed in the detection apparatus to receive, at different scanning angles, the light beam emitted by the first emitting module, thereby precisely marking a plurality of scanning angles of the scanning module, improving a granularity of angle detection for the scanning module, improving angle accuracy of the scanning module obtained through calculation, and improving accuracy of controlling the occasion for emitting the detection light beam by the detection apparatus. In some solutions, because important occasions during a detection process are moments at which detection starts and ends, two sets of receiving modules may be designed to respectively mark a scanning angle at which detection needs to start and a scanning angle at which detection needs to end, thereby improving the angle detection accuracy of the scanning module as much as possible while saving costs.

In another possible implementation of the first aspect, the calculation module is further configured to obtain a second indication signal based on the second detection data, and update the level of the first frame signal based on the second indication signal. The second indication signal changes to a second level at a second time location, and the second time location corresponds to the third moment and the second scanning angle. After the level of the first frame signal is updated this time, the first detection frame ends.

In the foregoing implementation, the second receiving module may be configured to determine an occasion at which the detection frame needs to end, thereby improving accuracy of controlling the occasion for emitting the detection light beam by the detection apparatus.

In another possible implementation of the first aspect, in a movement direction of the scanning module, a principal optical axis of the first receiving module and a principal optical axis of the second receiving module form a first included angle. The first included angle is the same as or corresponds to the FOV of the detection apparatus. In the foregoing implementation, accuracy of controlling the occasion for emitting the detection light beam by the detection apparatus can be improved.

In another possible implementation of the first aspect, the calculation module is further configured to determine a first subframe signal based on the first frame signal. The first subframe signal indicates a first subframe in the first detection frame. The second emitting module is further configured to emit the detection light beam in the first subframe, where the second moment is located in the first subframe. The first subframe (or referred to as a slot) is a time period with a finer granularity than the first detection frame.

In another possible implementation of the first aspect, in the first subframe, an angle through which the detection light beam scans is a sub-region of the FOV of the detection apparatus.

In another possible implementation of the first aspect, the first detection frame includes a plurality of first subframes. Scanning duration of detection light beams corresponding to the plurality of first subframes is the same, or scanning duration of detection light beams corresponding to the plurality of first subframes is predefined.

In the foregoing implementation, the first subframe is generated according to time, and duration (namely, corresponding scanning duration of the detection light beam) between the plurality of first subframes may be equal or unequal, thereby improving control flexibility of the detection process. For example, in some solutions, duration of a first subframe corresponding to a central part of the FOV is longer, and duration of a first subframe corresponding to an edge part of the FOV is shorter, to improve detection accuracy for the central part of the FOV.

In another possible implementation of the first aspect, the first detection frame includes a plurality of first subframes. Scanning angle widths of detection light beams corresponding to the plurality of first subframes are the same, or scanning angle widths of detection light beams corresponding to the plurality of first subframes are predefined.

In another possible implementation of the first aspect, the first emitting module and the first receiving module share an optical lens.

In another possible implementation of the first aspect, the first emitting module and the second receiving module share an optical lens.

In another possible implementation of the first aspect, the detection apparatus further includes an angle encoder. The angle encoder is configured to obtain angle detection data of the scanning module, and the calculation module in the detection apparatus is further configured to determine, based on the angle detection data, that the angle encoder is contaminated.

In the foregoing implementation, the angle encoder is disposed in the detection apparatus to detect the angle of the scanning module. When the angle encoder is contaminated, the detection apparatus may control, based on the first detection data (or the first detection data and the second detection data), time of emitting the detection light beam by the second emitting module. In this way, even when the angle encoder is contaminated, the angle of the scanning module can still be precisely determined, thereby improving angle accuracy of the detection apparatus.

In some solutions, the calculation module may perform contamination detection on the angle encoder with reference to the angle detection data and the first detection data (or the first detection data and the second detection data), thereby improving accuracy of detecting a contamination status of the angle encoder.

In another possible implementation of the first aspect, the scanning module includes at least two scanning surfaces. A scanning surface corresponding to the first emitting module is the same as a scanning surface corresponding to the second emitting module, or a scanning surface corresponding to the first emitting module is different from a scanning surface corresponding to the second emitting module. In this way, an emitting terminal used for detection and an emitting terminal used for angle detection can be flexibly designed, so that there is a plurality of possibilities for a physical design of the detection apparatus.

In another possible implementation of the first aspect, a wavelength of a light beam emitted by the first emitting module is different from a wavelength of a light beam emitted by the second emitting module. In this way, interference caused by a light beam generated during an angle detection process to a light beam used for detection can be reduced, which helps improve the detection performance of the detection apparatus.

According to a second aspect, this application provides a data processing method. The data processing method is applied to a detection apparatus. The detection apparatus includes a first emitting module, a second emitting module, a scanning module, and a first receiving module. The first emitting module is configured to generate a first emitted light beam at a first moment. The scanning module is configured to reflect the first emitted light beam at a first scanning angle to form a first reflected light beam. The first receiving module is configured to receive the first reflected light beam and obtain first detection data. The data processing method includes: obtaining first detection data, and controlling, based on at least the first detection data, a second emitting module to generate a detection light beam at a second moment. The first detection data indicates the first scanning angle and the first moment, and the second moment is related to the first moment and the first scanning angle. The scanning module in the detection apparatus is further configured to reflect the detection light beam to object space, to detect the object space.

In a possible implementation of the second aspect, controlling, based on at least the first detection data, the second emitting module to generate the detection light beam at the second moment includes: determining a first frame signal based on at least the first detection data, and controlling, based on the first frame signal, the second emitting module to generate the detection light beam at the second moment. Optionally, the first frame signal indicates a first detection frame, and the second moment is located in the first detection frame.

In another possible implementation of the second aspect, controlling, based on at least the first detection data, the second emitting module to generate the detection light beam at the second moment includes: obtaining a first indication signal based on the first detection data, updating a level of the first frame signal based on the first indication signal, and controlling, based on the first frame signal, the second emitting module to send the detection light beam in a first detection frame. The first indication signal changes to a first level at a first time location, and the first time location corresponds to the first moment and the first scanning angle. The first frame signal indicates the first detection frame, and the second moment is located in the first detection frame.

In another possible implementation of the second aspect, in the first detection frame, an angle through which the detection light beam scans is an FOV of the detection apparatus.

In another possible implementation of the second aspect, an amplitude value of the first detection data is related to intensity of light energy received by the first receiving module. When the amplitude value of the first detection data is greater than or equal to a first preset value, the first indication signal is at the first level.

In another possible implementation of the second aspect, the detection apparatus further includes a second receiving module. The first emitting module is further configured to generate a second emitted light beam at a third moment, and the scanning module is further configured to reflect the second emitted light beam at a third scanning angle to form a second reflected light beam. The second receiving module is configured to receive the second reflected light beam and obtain second detection data. The method further includes: obtaining second detection data, and controlling, based on the second detection data, the second emitting module not to generate a detection light beam at a fourth moment, where the second detection data indicates a third moment and a third scanning angle, and the fourth moment is related to the third moment and a second scanning angle.

In another possible implementation of the second aspect, controlling, based on the second detection data, the second emitting module not to generate the detection light beam at the fourth moment includes: obtaining a second indication signal based on the second detection data, and updating the level of the first frame signal based on the second indication signal to end the first detection frame. The second indication signal changes to a second level at a second time location, and the second time location corresponds to the third moment and the third scanning angle.

In another possible implementation of the second aspect, controlling, based on the first frame signal, the second emitting module to generate the detection light beam at the second moment includes: determining a first subframe signal based on the first frame signal, and controlling the second emitting module to emit the detection light beam in a first subframe. The first subframe signal indicates the first subframe in the first detection frame, and the second moment is located in the first subframe.

In another possible implementation of the second aspect, the first detection frame includes a plurality of first subframes. Scanning duration of detection light beams corresponding to the plurality of first subframes is the same, or scanning duration of detection light beams corresponding to the plurality of first subframes is predefined.

In another possible implementation of the second aspect, the first detection frame includes a plurality of first subframes. Scanning angle widths of detection light beams corresponding to the plurality of first subframes are the same, or scanning angle widths of detection light beams corresponding to the plurality of first subframes are predefined.

In another possible implementation of the second aspect, the detection apparatus further includes an angle encoder, and the angle encoder is configured to obtain angle detection data of the scanning module. The foregoing method further includes: determining, based on angle detection data, that an angle encoder is contaminated.

According to a third aspect, this application provides a data processing apparatus, including a data obtaining unit and a processing unit. The data obtaining unit is configured to obtain data, for example, receive first detection data, or receive second detection data, or receive angle detection data. The processing unit is configured to process the data and control another unit to complete a function. The data processing apparatus is configured to implement the method according to the second aspect or any one of the possible implementations of the second aspect.

According to a fourth aspect, this application provides a calculation module, and the calculation module includes a processor and a communication interface. The processor is configured to perform data calculation, and the communication interface is configured to provide data to the processor and/or output, to the outside, data processed by the processor. The calculation module is configured to implement the method according to the second aspect or any one of the possible implementations of the second aspect.

According to a fifth aspect, this application provides a lidar, and the lidar includes the detection apparatus according to the first aspect or any one of the possible implementations of the first aspect. The detection apparatus includes a calculation module, and the calculation module is configured to implement the method according to the second aspect or any one of the possible implementations of the second aspect.

According to a sixth aspect, this application provides a terminal, including the detection apparatus according to the first aspect or any one of the possible implementations of the first aspect, or including the data processing apparatus according to the third aspect, or including the calculation module according to the fourth aspect, or including the lidar according to the fifth aspect.

According to a seventh aspect, this application provides a computer storage medium. The computer storage medium includes computer instructions. When the computer instructions are executed by a compute device, the data processing method according to any one of the implementations of the second aspect is implemented.

For beneficial effects of the second aspect to the seventh aspect of this application, refer to the beneficial effects of the first aspect.

### BRIEF DESCRIPTION OF DRAWINGS

The following briefly describes accompanying drawings used in describing embodiments.
FIG. 1 is a diagram of a structure of a detection apparatus according to an embodiment of this application;
FIG. 2(a) and FIG. 2(b) are diagrams of a scanning angle of a scanning module according to an embodiment of this application;
FIG. 3 is a diagram of first detection data according to an embodiment of this application;
FIG. 4 is a diagram of a first indication signal according to an embodiment of this application;
FIG. 5 is a diagram of a first frame signal according to an embodiment of this application;
FIG. 6 is a diagram of a structure of another detection apparatus according to an embodiment of this application;
FIG. 7(a) and FIG. 7(b) are diagrams of a scanning angle of another scanning module according to an embodiment of this application;
FIG. 8 is a diagram of a first indication signal, a second indication signal, and a first frame signal according to an embodiment of this application;
FIG. 9 is a diagram of a subframe according to an embodiment of this application;
FIG. 10(a) and FIG. 10(b) are diagrams of a scanning angle of still another scanning module according to an embodiment of this application;
FIG. 11 is a diagram of a structure of still another detection apparatus according to an embodiment of this application;
FIG. 12 is a diagram of a structure of yet another detection apparatus according to an embodiment of this application;
FIG. 13 is a schematic flowchart of a data processing method according to an embodiment of this application;
FIG. 14 is a timing diagram of several signals according to this application;
FIG. 15 is a timing diagram of several other signals according to an embodiment of this application;
FIG. 16 is a diagram of a detection process according to an embodiment of this application;
FIG. 17 is a diagram of a signal processing procedure according to an embodiment of this application;
FIG. 18 is a diagram of a structure of a data processing apparatus according to an embodiment of this application; and
FIG. 19 is a diagram of a structure of a calculation module according to an embodiment of this application.

### DESCRIPTION OF EMBODIMENTS

When a scanning detection apparatus performs detection, an emitting module generates a detection light beam. The detection light beam is projected onto different regions of object space at different angles under the action of a scanning module, to implement scanning of the object space. Accurately detecting an angle of the scanning module facilitates precise control of an operation period of the detection apparatus, and can improve detection accuracy and detection efficiency of the detection apparatus.

The following first describes a detection apparatus provided in this application. It should be noted that an architecture and an application scenario of the apparatus described in this application are intended to describe the technical solutions in this application more clearly, and do not constitute a limitation on the technical solutions provided in this application. A person of ordinary skill in the art may learn that with the evolution of the architecture and the emergence of new service scenarios, the technical solutions provided in this application are also applicable to similar technical problems.

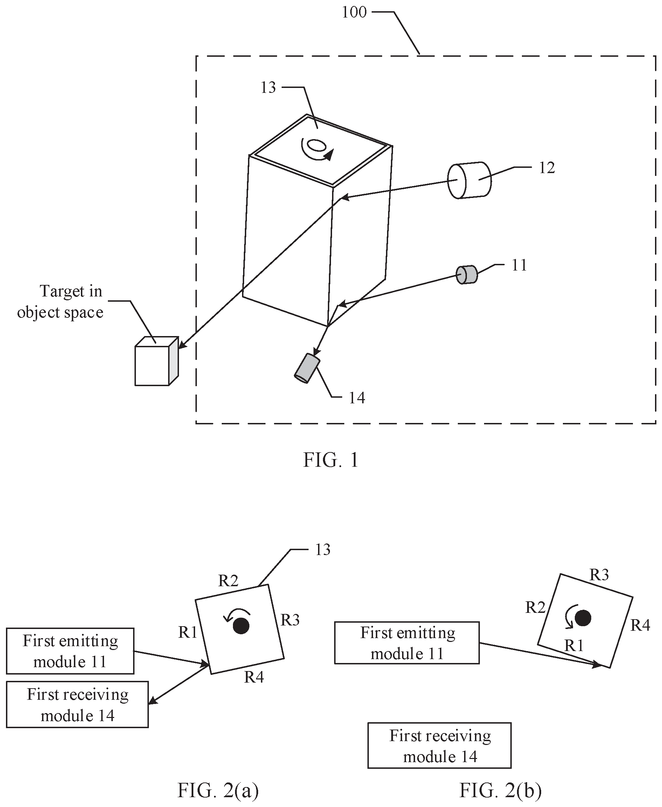

FIG. 1 is a diagram of a structure of a detection apparatus according to an embodiment of this application. A detection apparatus 100 includes a first emitting module 11, a second emitting module 12, a scanning module 13, and a first receiving module 14. Specifically:
The first emitting module 11 is an apparatus capable of generating a light beam, and includes a light source, for example, one or more of the following light sources: a laser diode (laser diode, LD), a vertical-cavity surface-emitting laser (vertical-cavity surface-emitting laser, VCSEL), a photonic crystal surface-emitting laser (photonic crystal surface-emitting laser, PCSEL), an edge emitting laser (edge emitting laser, EEL), a distributed feedback laser diode (distributed feedback LD, DFB-LD), a grating coupled sampling reflection laser diode (grating coupled sampling reflection LD, GCSR-LD), a micro opto electro mechanical system laser diode (micro opto electro mechanical system LD, MOEMS-LD), or the like. Optionally, the first emitting module 11 may continuously emit a light beam, or may emit a light beam in a form of a plurality of pulses.
The second emitting module 12 is configured to emit a detection light beam. Different from the first emitting module 11, the detection light beam emitted by the second emitting module 12 is used to detect object space. As shown in FIG. 1, the detection light beam may be projected onto a target in the object space after being reflected by the scanning module. Usually, a light beam emitted by the second emitting module 12 has high energy density and high collimation. For example, the energy density of the light beam emitted by the second emitting module 12 is higher than that of a light beam emitted by the first emitting module 11, to support detection of a target within a specific distance range. For example, the second emitting module 12 may include one or more of the following light sources: the VCSEL, the PCSEL, the EEL, the LD, the DFB-LD, the GCSR-LD, the MOEMS-LD, or the like. Optionally, the light source included in the second emitting module 12 may be the same as or different from a light source included in the first emitting module 11. In a possible implementation, the second emitting module 12 includes a laser emitting chip, and the laser emitting chip includes one or more of the light sources described above. In a possible case, the second emitting module 12 includes one VCSEL chip. In another possible case, the second emitting module 12 includes a laser emitting chip formed by tiling a plurality of VCSEL chips.

The scanning module 13 is movable. The scanning module 13 includes, but is not limited to, one or more of a rotating mirror, an oscillating mirror, a galvanometer mirror, or the like. FIG. 1 shows a scanning apparatus by using a rotating mirror as an example. In FIG. 1, a rotating mirror having only four reflective surfaces is used as an example for description. This application is also applicable to a rotating mirror having more or fewer reflective surfaces. For example, this application is applicable to scanning modules with a single surface (namely, one reflective surface), two surfaces, three surfaces, five surfaces, six surfaces, and so on. In addition, a scanning direction of the scanning module 13 shown in this application is only an example. In some solutions, the scanning module may rotate clockwise or counterclockwise, or perform reciprocating movement to perform scanning.

The first receiving module 14 is configured to receive a light beam. In this embodiment of this application, an optical path may exist among the first emitting module 11, the scanning module 13, and the first receiving module 14. In this way, when the scanning module 13 is at a specific scanning angle, the first receiving module 14 can receive a light beam that is reflected by the scanning module and that is from the first emitting module 11. The first receiving module 14 includes a photoelectric conversion element, which can receive an optical signal and convert the optical signal into an electrical signal. For example, the first receiving module 14 may include a detector. The detector may include a photodetector (photodetector, PD) type element, for example, a PD, a "positive-intrinsic-negative" (positive-intrinsic-negative, PIN) diode (PIN for short), or an avalanche photodiode (avalanche photodiode, APD).

In this embodiment of this application, the first emitting module 11 and the first receiving module 14 are a set of detection apparatus for detecting the scanning module, and an angular relationship in an optical path exists among the first emitting module 11, the scanning module 13, and the first receiving module 14. FIG. 2(a) and FIG. 2(b) are diagrams of a scanning angle of a scanning module according to an embodiment of this application. In FIG. 2(a) and FIG. 2(b), an example in which the scanning module 13 includes four reflective surfaces is used for description, and the four reflective surfaces may be represented as R1, R2, R3, and R4. As shown in FIG. 2(a), when the scanning module 13 is at a first scanning angle, a light beam emitted by the first emitting module 11 may be received by the first receiving module 14 after being reflected by the reflective surface R1 of the scanning module 13. As shown in FIG. 2(a), the light beam completes a closed loop from emission to reception through the first emitting module 11, the scanning module 13, and the first receiving module 14. When the light beam propagates along this optical path, a function of the light beam is to reflect an angle of the scanning module 13, and the light beam does not need to propagate to the object space. In other words, the light beam emitted by the first emitting module 11 does not propagate to the object space.

As shown in FIG. 2(b), when the scanning module 13 rotates to another angle, the light beam reflected by the reflective surface R1 no longer enters the first receiving module 14, and consequently, the first receiving module 14 cannot receive the light beam from the first emitting module 11. In this case, the light beam emitted by the first emitting module 11 also does not propagate to the object space. Because the scanning module 13 is movable, when the scanning module 13 is again at the first scanning angle subsequently, the first receiving module 14 may again receive the light beam reflected by the scanning module 13. By analogy with FIG. 2(a), when the reflective surface R2 is at the angle of the reflective surface R1 shown in FIG. 2(a), the first receiving module 14 may again receive the light beam reflected by the scanning module 13.

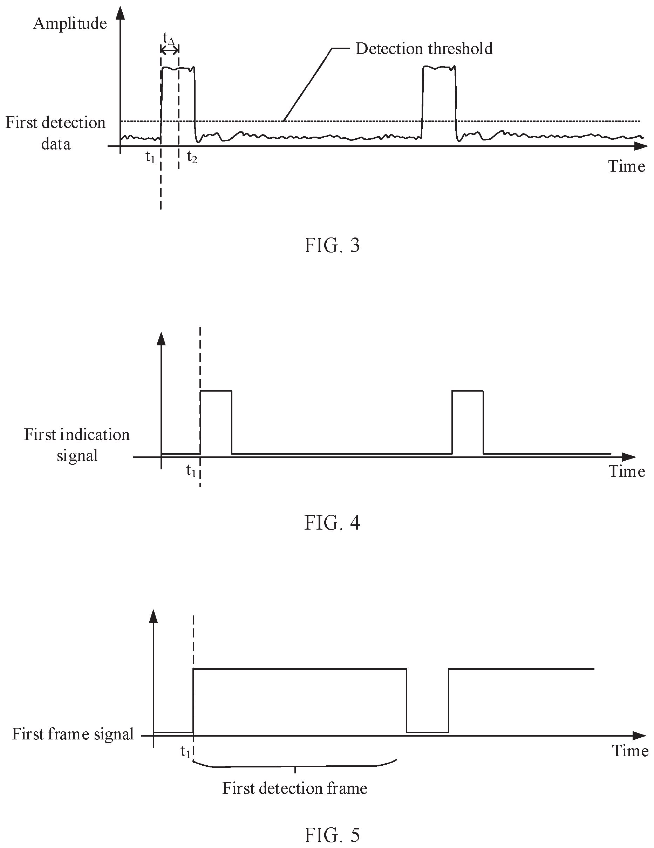

The first receiving module 14 can obtain a capability of a light beam to obtain detection data. It can be learned that the detection data obtained by the first receiving module 14 can indicate a moment at which the light beam is received and the first scanning angle, so that an angle value of the scanning module at a specific moment can be determined. FIG. 3 is a diagram of first detection data according to an embodiment of this application. The first detection data may be a value with amplitude, and an amplitude change can reflect the moment at which the light beam is received and the scanning angle of the scanning module 13. In a possible example, with reference to FIG. 3, the first emitting module 11 generates a first emitted light beam at a first moment (for example, a moment *t*₁), and the scanning module 13 reflects the first emitted light beam at a first scanning angle to form a first reflected light beam. The first receiving module 14 receives the first reflected light beam and obtains first detection data (as shown in FIG. 3). It may be understood that, as the scanning module 13 continues to move, the detection data obtained by the first receiving module 14 have a plurality of large amplitude changes, to indicate, for a plurality of times, the moment at which the light beam is received and an angle value of the scanning module 13.

It should be noted that there is a correspondence between a moment at which the first receiving module 14 receives the first reflected light beam and an emission moment of the first light beam (namely, the first moment). In some solutions, due to a short propagation distance of the light beam between the first emitting module 11 and the first receiving module 14, the moment at which the first reflected light beam is received may be considered the same as the first moment, and the first moment may be considered as a moment at which the first receiving module 14 receives a first return light beam.

Based on the moment indicated by the first detection data, an occasion at which the second emitting module emits the detection light beam may be controlled. In some possible implementations, the second emitting module 12 generates the detection light beam at a second moment. The second moment is related to the first moment and the first scanning angle. For example, with reference to FIG. 3, if the first detection data indicates that a scanning angle of the scanning module at the moment *t*₁ is the first scanning angle, the second emitting module may generate the detection light beam at a moment *t*₂. The moment *t*₁ may be after the moment *t*₁, for example, a time difference *t*_{Δ} exists between the moment *t*₁ and the moment *t*₁, so that the detection light beam can perform detection at a specific scanning angle. Optionally, *t*_{Δ} may be designed to be small, for example, 0. In this case, the moment *t*₂ is the same as the moment *t*₁. For example, the first scanning angle may correspond to a start scanning angle of an FOV of the detection apparatus. After the first receiving module 14 receives the first return light beam, it indicates that a current scanning angle of a scanner corresponds to the start scanning angle of the FOV, and the second emitting module 12 is triggered to emit the detection light beam for detection.

As mentioned above, the first detection data may be data with amplitude. In some possible implementations, the first detection data may be processed into a signal in a form of a pulse (referred to as a first indication signal for ease of description), to more accurately and intuitively indicate the moment and the scanning angle. FIG. 3 is used as an example. The first indication signal may be obtained based on the first detection data and a detection threshold. The first indication signal may have a plurality of level statuses. For example, the first indication signal may have a high level and a low level (voltage ranges of the high level and the low level may be predefined), and the level status can indicate whether the first receiving module receives the first reflected light beam. FIG. 4 is a diagram of a first indication signal according to an embodiment of this application. When an amplitude value of the first detection data is greater than or equal to a first preset value (for example, the detection threshold shown in FIG. 3), the first indication signal is at a first level. For example, at the moment *t*₁, the level status of the first indication signal changes to a high level, to indicate that the first detection module receives the first reflected light beam.

In some possible implementations, comparison between the detection threshold and the amplitude value may be performed by the first receiving module 14. In this case, the first detection data obtained by the first receiving module 14 may be replaced with the first indication signal shown in FIG. 4. In other words, the first receiving module 14 receives the first reflected signal to obtain amplitude data, and based on the amplitude data, the first indication signal may be determined and output.

In some possible implementations, the first detection data and/or the first indication signal indicate/indicates a detection frame (referred to as a first detection frame for ease of distinction). The first detection frame is a time period in which the detection apparatus completes one full detection of the field of view (field of view, FOV), and may alternatively be considered as a time period in which one frame of image is obtained. For example, the first indication signal indicates that a time period starting from the moment *t*₁ is the first detection frame.

In some possible implementations, the first detection data and/or the first indication signal may be used to determine the first frame signal, and the first frame signal indicates the first detection frame. FIG. 5 is a diagram of a first frame signal according to an embodiment of this application. For example, the first frame signal is determined based on the first indication signal. When the first indication signal is a rising edge, a level status of the first frame signal changes, for example, a level is pulled high to generate a rising edge. Certainly, the case shown in FIG. 5 is merely an example, and there may be another implementation in a specific implementation. For example, after the first indication signal experiences a rising edge and remains at a high level for first duration, the level status of the first frame signal changes.

The following further describes content of the first detection frame with reference to the first frame signal shown in FIG. 5. In the first detection frame, an angle through which the detection light beam emitted by the second emitting module 12 scans is the FOV of the detection apparatus. In other words, in the first detection frame, the detection apparatus 100 may obtain detection data for one frame of image. Optionally, the FOV may be replaced with an FOV along a scanning direction, for example, a horizontal FOV or a vertical FOV. For example, when the rising edge of the first frame signal indicates a start of the first detection frame, a falling edge of the first frame signal indicates an end of the first detection frame. In other words, a time period in which the first frame signal is at a high level represents duration of the first detection frame.

With reference to the foregoing description, the first detection frame is related to the first moment. For example, a start moment of the first detection frame is the first moment, as shown in FIG. 5. For another example, the start moment of the first detection frame may be determined by using the first moment. For example, an interval of the first duration exists between the first moment and the start moment of the first detection frame.

In some possible implementations, an end moment of the first detection frame may be indicated by using another signal (described below). Alternatively, duration between the end moment of the first detection frame and the start moment of the first detection frame is predefined. For example, if duration of the first detection frame is second duration, an interval between the end moment of the first detection frame and the start moment of the first detection frame is the second duration.

As mentioned above, the first detection frame is a time period in which the detection apparatus performs detection. Therefore, the second emitting module 12 may emit the detection light beam in the first detection frame, and the second moment is located in the first detection frame. For example, the second moment is the start moment of the first detection frame, and for another example, the second moment is any moment in the duration of the first detection frame.

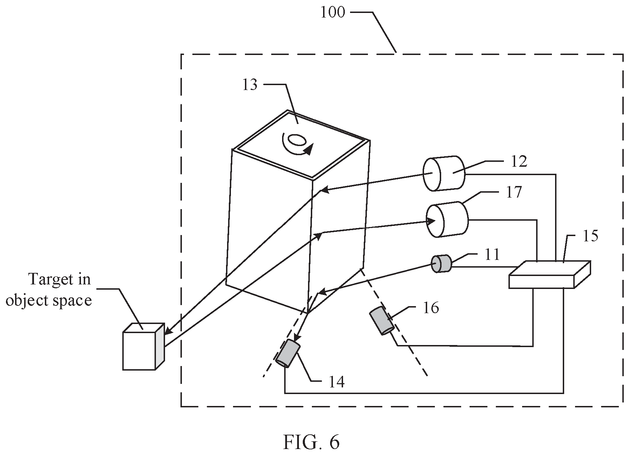

The following continues to describe some possible implementations of this application with reference to FIG. 6.

FIG. 6 is a diagram of a structure of another detection apparatus according to an embodiment of this application. The detection apparatus 100 further includes one or more of a calculation module 15, a second receiving module 16, and a third receiving module 17. The following separately provides descriptions.

In some possible implementations, the detection apparatus 100 further includes the calculation module 15, which is also referred to as a main control module, a signal processing module, or the like in some solutions. The calculation module 15 is an apparatus having a computing capability and a control capability, and is configured to process data. For example, the calculation module 15 is configured to obtain the first frame signal based on the first detection data, and the first frame signal is shown in FIG. 5. For example, the calculation module 15 includes an apparatus having a computing capability, such as a processor or a controller. For example, the calculation module 15 may include one or more of an application-specific integrated circuit (application-specific integrated circuit, ASIC), a programmable logic device (programmable logic device, PLD), a central processing unit (central processing unit, CPU), a digital signal processor (digital signal processor, DSP), a microprocessor, a microcontroller, and a combination thereof. The PLD is, for example, a field programmable gate array (field programmable gate array, FPGA). In some solutions, the calculation module 15 may include a plurality of parts, for example, include a signal processing circuit and a control circuit. The plurality of parts may be integrated together, or may be disposed independently. This is not strictly limited in this application.

In some possible implementations, the calculation module 15 is configured to obtain the first indication signal based on the first detection data, and update a level of the first frame signal based on the first indication signal. With reference to FIG. 4 and FIG. 5, the first indication signal changes to the first level at a first time location (for example, the moment *t*₁ shown in FIG. 4), and the first time location corresponds to the first moment and the first scanning angle. The calculation module updates the level of the first frame signal based on the change of the first indication signal. With reference to FIG. 5, the first frame signal may indicate the first detection frame.

In some possible implementations, the calculation module further includes a second receiving module 16. The second receiving module 16 is configured to receive a light beam, and an optical path may exist among the first emitting module 11, the scanning module 13, and the second receiving module 16. In this way, when the scanning module 13 is at a specific scanning angle (referred to as a second scanning angle for ease of distinction), the second receiving module 16 may receive a light beam that is from the first emitting module 11 and that is reflected by the scanning module. The first receiving module 14 further includes a photoelectric conversion element, such as an APD, a PD, or a PIN. Optionally, structures and optical properties of the first receiving module 14 and the second receiving module 16 may be the same or different.

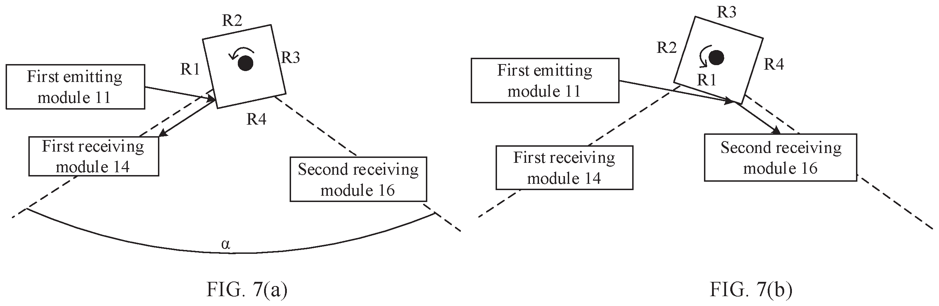

It should be understood that an angular relationship in an optical path among the first emitting module 11, the scanning module 13, and the second receiving module 16 is different from the angular relationship among the first emitting module 11, the scanning module 13, and the first receiving module 14. FIG. 7(a) and FIG. 7(b) are diagrams of a scanning angle of another scanning module according to an embodiment of this application. As shown in FIG. 7(a), when the scanning module 13 is at the first scanning angle, a light beam emitted by the first emitting module 11 may be received by the first receiving module 14 after being reflected by the reflective surface R1 of the scanning module 13. As shown in FIG. 7(b), when the scanning module 13 moves to the second scanning angle, the light beam emitted by the first emitting module 11 may be received by the second receiving module 16 after being reflected by the reflective surface R1 of the scanning module 13. In this way, detection data obtained by the second receiving module 16 (referred to as second detection data for ease of distinction) can indicate the second scanning angle, and the second detection data also indicates a moment at which the second receiving module 16 receives the light beam, thereby precisely determining the angle value of the scanning module at a specific moment. Optionally, the second detection data may be a value with amplitude, so that an amplitude change can reflect the moment at which the light beam is received and the angle value of the scanning module 13. The second detection data is similar to the first detection data shown in FIG. 3. For a related processing process, refer to the processing process of the detection data from the first receiving module 14.

In some possible implementations, at a fourth moment, the second emitting module stops generating the detection light beam, and the fourth moment is related to the third moment and the second scanning angle. For example, the fourth moment is the same as the third moment, or the fourth moment is determined by the third moment (or the second scanning angle). It may be understood that, because the third moment corresponds to the second scanning angle, the fourth moment may be related to the third moment and the second scanning angle. In this way, the second emitting module generates the detection light beam to detect the object space in a time period between the second moment and the fourth moment. Because a scanning angle of the scanning module corresponds to a moment, a width of an angle through which the detection light beam scans between the second moment and the fourth moment can also be determined, so that an angular range of detection of the detection apparatus can be determined. This improves scanning control accuracy of the detection apparatus and improves accuracy of the detection apparatus.

In some possible implementations, the second detection data may be processed into a signal in a form of a pulse, which is referred to as the second indication signal for ease of description. Similar to FIG. 3, the second indication signal may be obtained based on the second detection data and a detection threshold, and a level status of the second indication signal may indicate whether the second receiving module receives the second reflected light beam. Optionally, the detection threshold of the first detection data may be the same as or different from the detection threshold of the second detection data. This is not strictly limited in this application.

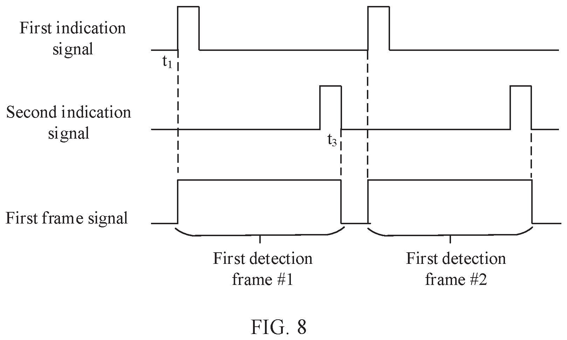

In some possible implementations, the second indication signal indicates the first detection frame, for example, indicates the end moment of the first detection frame. FIG. 8 is a diagram of a first indication signal, a second indication signal, and a first frame signal according to an embodiment of this application. The second indication signal may change to a second level (for example, a low level) at a second time location (for example, a moment *t*₃), and the second time location corresponds to the third moment and the second scanning angle. Based on a characteristic of the level status of the second indication signal, the level of the first frame signal may be updated. As shown in FIG. 8, after the second indication signal generates a falling edge, the level status of the first frame signal may be pulled low, thereby generating a falling edge, and the falling edge of the second frame signal indicates the end of the first detection frame. In conclusion, with reference to the foregoing description and FIG. 8, the first indication signal and the second indication signal may be used to determine the first frame signal, and the first frame signal indicates the first detection frame.

Certainly, the case shown in FIG. 8 is merely an example, and there may be other designs in some solutions. For example, after the first indication signal experiences a rising edge and remains at a high level for the first duration, the first frame signal is updated to a rising edge. Alternatively, when the first indication signal experiences a falling edge, the first frame signal is updated to a rising edge. Similarly, in some solutions, after the second indication signal experiences a falling edge and remains at a high level for third duration, the first frame signal is updated to a falling edge. Alternatively, when the second indication signal experiences a rising edge, the first frame signal is updated to a rising edge.

In some possible implementations, in a movement direction of the scanning module 13, the first receiving module 14 and the second receiving module 16 form a first included angle. As shown in FIG. 7(a) and FIG. 7(b), the movement direction of the scanning module 13 is a direction parallel to a plane of a page. In the movement direction, the included angle between the first receiving module 14 and the second receiving module 16 is the first included angle, represented as α in FIG. 7(a) and FIG. 7(b). In some solutions, the first included angle α is the same as or corresponds to the FOV of the detection apparatus. The term "corresponds to" means that there is a correlation between the first included angle α and the FOV of the detection apparatus. For example, there is a first difference between the first angle α and the FOV, or a ratio between the first angle α and the FOV may be calculated. The FOV may be replaced with an FOV in the movement direction of the scanning module 13, for example, a horizontal FOV or a vertical FOV.

With reference to the foregoing description, when the first included angle α is the same as the FOV of the detection apparatus, an angle width between the first scanning angle and the second scanning angle is the same as the FOV of the detection apparatus. In this case, the first detection data may indicate a start scanning angle of the FOV, thereby triggering the second emitting module to emit a detection light beam for detection. The second detection data may indicate an end scanning angle of the FOV, thereby triggering the second emitting module to stop emitting the detection light beam.

In some scenarios, the second emitting module does not continuously emit a detection light beam in the first detection frame, but emits the detection light beam at intervals in some sub-time periods of the first detection frame. These sub-time periods may be referred to as subframes, or slots, and are referred to as first subframes for ease of distinction. As mentioned above, one detection frame (for example, the first detection frame and a second detection frame described below) may correspond to one picture, and one subframe may correspond to a strip-shaped region in the picture, also referred to as a "line". A picture includes a plurality of "lines".

In some possible implementations, the first detection frame may include a plurality of first subframes. There is a time interval between two adjacent first subframes in the plurality of first subframes. The second emitting module 12 emits a detection light beam in the first subframe, and does not generate a detection light beam in the time interval between the first subframes, or does not project the detection light beam to the object space in the time interval between the first subframes.

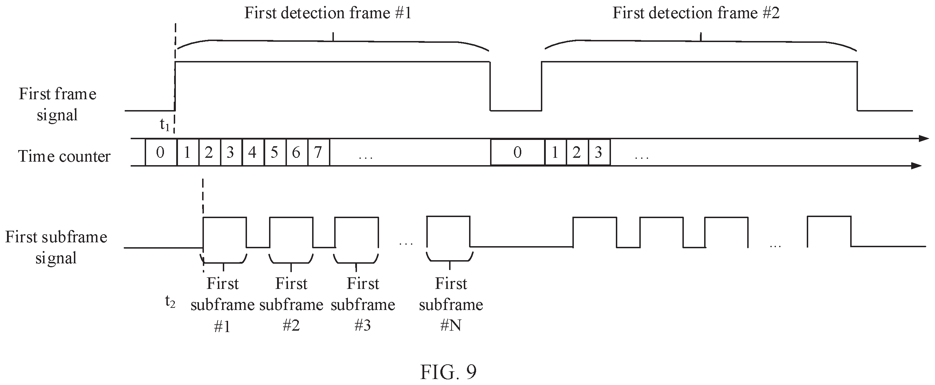

FIG. 9 is a diagram of a subframe according to an embodiment of this application. The first detection frame includes N first subframes, where N is an integer and N≥1. For ease of description, the N first subframes are respectively represented as a first subframe #1 to a first subframe #N. In the N first subframes, there is a time interval between two adjacent first subframes. For example, when the first subframe signal is at a high level, the second emitting module 12 emits the detection light beam; and when the first subframe signal is at a low level, the second emitting module 12 does not emit a detection light beam. In this way, lighting time of the second emitting module 12 is controlled based on the first subframe signal.

Optionally, the second moment is located in the first subframe, and the second moment is related to the first moment. For example, the start moment of the first detection frame is the moment *t*₁ (namely, the first moment), and a start moment of a 1st first subframe (namely, the first subframe #1) is the moment *t*₂. The moment *t*₂ can be considered as the second moment.

In some possible implementations, in the first detection frame, a subframe may be generated according to time. For example, scanning duration of detection light beams corresponding to the plurality of first subframes is the same, or scanning duration of detection light beams corresponding to the plurality of first subframes is predefined. Optionally, interval duration between the plurality of first subframes may be the same or different. For example, as shown in FIG. 9, duration of each first subframe is equal, for example, two unit times, and intervals between the first subframes may be the same, for example, one unit time. Optionally, the time may be obtained from a timer (or a time counter, timer). Optionally, when a pulse of the first indication signal arrives, the timer starts counting from a preset value (for example, 0).

In some possible implementations, in the first detection frame, a subframe may be generated according to an angle (or referred to as a location). With reference to FIG. 8, between the pulse of the first indication signal and a pulse of the second indication signal, a movement angle of the scanning module 13 is the angle width between the first scanning angle and the second scanning angle. Therefore, scanning angles of the scanning module 13 at different moments can be determined. Based on the first detection frame, a plurality of first subframes are generated in the first detection frame according to the scanning angle. For example, scanning angle widths of detection light beams corresponding to the plurality of first subframes are the same, or scanning angle widths of detection light beams corresponding to the plurality of first subframes are predefined.

In some possible implementations, refer to FIG. 6. The detection apparatus 100 further includes a third receiving module 17. The third receiving module 17 includes a photoelectric conversion element. The third receiving module 17 is configured to receive a return light beam from the object space, and the light beam includes an echo of the detection light beam. As shown in FIG. 6, the detection light beam is projected onto a target in the object space and is reflected by the target to form the echo. The echo may be received by the third receiving module 17, so that information about the target can be obtained, such as a distance, an angle, a location, a reflectivity, a color, or a speed of the target. For example, the third receiving module 17 includes a detector, and the detector includes one or more of the following detection elements: a single photon avalanche diode (single photon avalanche diode, SPAD), a silicon photomultiplier (silicon photomultiplier, SiPM), an APD, a multi-pixel photon counter (multi-pixel photon counter, MPPC), an electron multiplying charge-coupled device (electron multiplying charge-coupled device, EMCCD), and the like. The third receiving module 17 may include a plurality of detection elements, and the plurality of detection elements may be arranged in an array to form an array detector. For example, the third receiving module 17 may include an SPAD array.

In some possible implementations, the first detection frame is further used to control a reception occasion of the third receiving module 17. For example, in the first detection frame, the detector in the third receiving module 17 is in a power-on state, and may receive the return light beam. Alternatively, in a time period indicated by the first subframe in the first detection frame, the detector in the third receiving module 17 is in a power-on state. In the time period indicated by the interval between the first subframes, the detector is in a non-operating state, or detection data output in the interval between the first subframes is not used.

In some possible implementations, a wavelength of a light beam emitted by the first emitting module 11 is different from a wavelength of a light beam emitted by the second emitting module 12, to avoid interference caused by a light beam for detecting the angle of the scanning module 13 to the detection light beam, thereby improving detection accuracy of the detection apparatus 100.

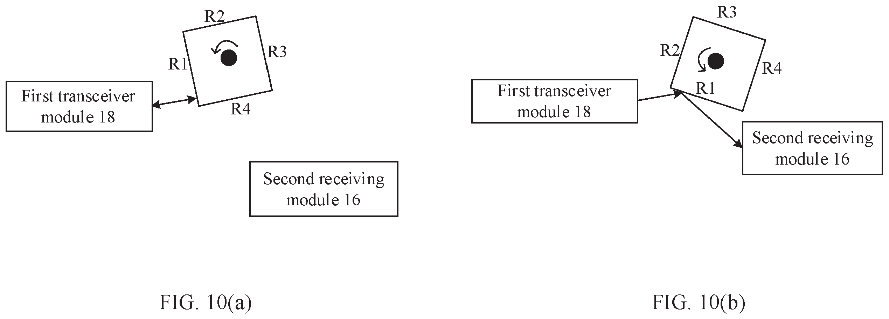

In some possible implementations, the first emitting module 11 and the first receiving module 14 may share an optical lens, or the first emitting module 11 and the first receiving module 14 may not share an optical lens. FIG. 10(a) and FIG. 10(b) are diagrams of a scanning angle of still another scanning module according to an embodiment of this application. Refer to FIG. 10(a) and FIG. 10(b). A first transceiver module 18 integrates the first emitting module 11 and the first receiving module 14. The first emitting module 11 and the first receiving module 14 may be designed for coaxial transmission and reception, and may share an optical lens. The first transceiver module 18 and the second receiving module 16 form a first included angle, and the first included angle is the same as or corresponds to the field of view FOV of the detection apparatus 100.

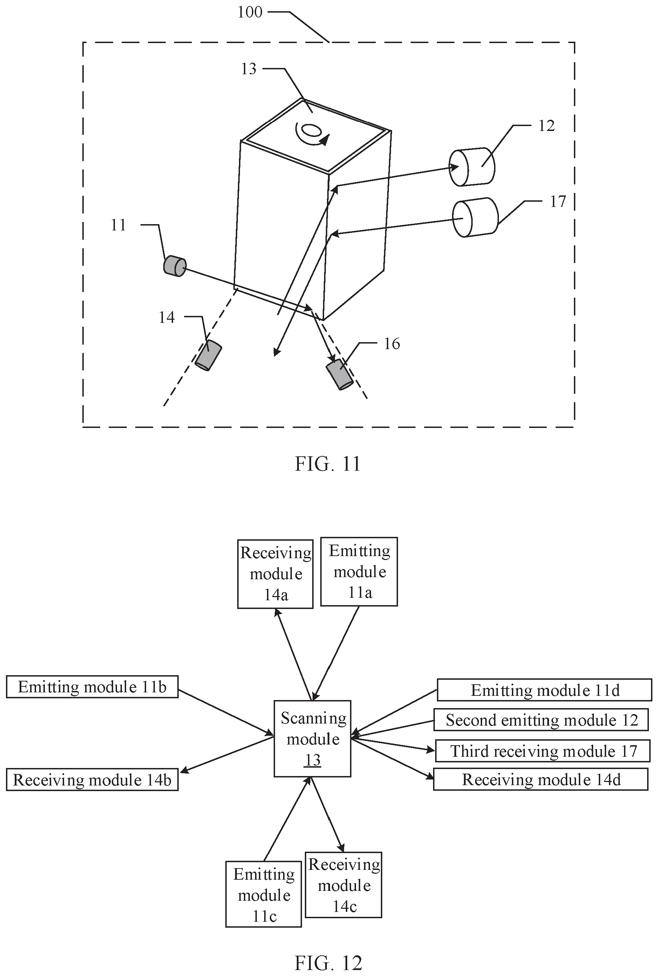

In some possible implementations, the scanning module 13 includes at least two scanning surfaces. A scanning surface corresponding to the first emitting module 11 is the same as a scanning surface corresponding to the second emitting module 12, as shown in FIG. 1 or FIG. 6. Alternatively, the scanning surface corresponding to the first emitting module 11 is different from the scanning surface corresponding to the second emitting module 12. As shown in FIG. 11, the first emitting module, the first receiving module 14, and the second receiving module 16 correspond to one scanning surface of the scanning module 13, and the second emitting module 12 corresponds to another scanning surface of the scanning module 13. Optionally, an example in which the second emitting module 12 and the third receiving module 17 share a scanning surface is used for description in this application. In some solutions, the second emitting module 12 and the third receiving module 17 may alternatively correspond to different scanning surfaces. In some other solutions, a plurality of third receiving modules 17 may be designed. In the plurality of third receiving modules 17, a part of the third receiving modules share a scanning surface with the second emitting module 12, and the other part of the third receiving modules do not share a scanning surface with the second emitting module 12.

In some possible implementations, a plurality of sets of the first emitting modules 11 and the first receiving modules 14 (or the first receiving modules 14 and the second receiving modules 16) for angle detection may be provided. As shown in FIG. 12, the scanning module 13 includes four scanning surfaces, and four sets of transceiver modules used for measuring the angle of the scanning module 13 are respectively disposed on the four scanning surfaces, with each set of transceiver module corresponding to one scanning surface. For example, the four sets of transceiver modules shown in FIG. 12 are respectively an emitting module 11a and a receiving module 14a, an emitting module 11b and a receiving module 14b, an emitting module 11c and a receiving module 14c, and an emitting module 11d and a receiving module 14d. The four sets of transceiver modules can respectively obtain four sets of detection data, and the four sets of detection data may be used to more precisely determine a current scanning angle of the scanning module 13. In some solutions, for each set of transceiver module, a scanning angle at which the receiving module can receive an emitted light beam may be the same or different. Optionally, each set of transceiver module may include one or more receiving modules. When a set of transceiver module includes a plurality of receiving modules, scanning angles at which the receiving modules can receive emitted light beams may be the same or different.

Optionally, in FIG. 12, an example in which each scanning surface corresponds to one set of an emitting terminal and a receiving terminal for detecting the angle of the scanning module is used. In some solutions, one scanning surface may alternatively use a plurality of sets of emitting terminals and receiving terminals for detecting the angle of the scanning module.

In some possible implementations, the detection apparatus 100 further includes an angle encoder (not shown). The angle encoder is configured to obtain angle detection data of the scanning module, and the angle detection data may be used to obtain an angle value of the scanning module. For example, the angle encoder is, for example, an optical angle encoder or a magnetic angle encoder. The optical angle encoder includes a code disk and an encoder, and the magnetic angle encoder includes a magnetic pole and an encoder. Some embodiments of this specification are described by using the optical angle encoder as an example.

Optionally, the angle value obtained based on the angle detection data from the angle encoder and the angle value obtained based on the detection data from the first receiving module 14 (or from the first receiving module 14 and the second receiving module 16) may be jointly used to control an occasion for emitting the detection light beam by the detection apparatus 100.

In a possible example, the angle detection data from the angle encoder may be used to perform contamination detection to determine whether the angle detection data from the angle encoder is accurate. For example, when it is determined based on the angle detection data that the angle encoder is contaminated, a light emission occasion (and/or a reception occasion) is controlled based on the detection data from the first receiving module 14 (or the first receiving module 14 and the second receiving module 16). The term "contaminated" should be understood in a broad sense, and may include any phenomenon in which monitoring data of the angle encoder cannot accurately reflect the angle of the scanning module due to various reasons, including not only dirt, contamination, and the like, but also aging, damage, and the like.

In another possible example, the calculation module 15 performs detection on the angle detection data based on the angle detection data from the angle encoder and the detection data from the first receiving module 14 (or the first receiving module 14 and the second receiving module 16). When it is determined based on the angle detection data that the angle encoder is contaminated, light emission timing (and/or the reception occasion) is controlled based on the detection data from the first receiving module 14 (or the first receiving module 14 and the second receiving module 16).

The following describes a method provided in embodiments of this application.

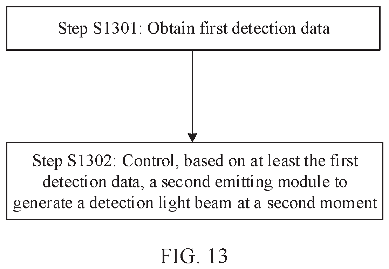

FIG. 13 is a schematic flowchart of a data processing method according to an embodiment of this application. The method may be applied to the foregoing detection apparatus, for example, the detection apparatus 100 shown in embodiments shown in FIG. 3, FIG. 6, and FIG. 11. For example, the calculation module 15 in the detection apparatus 100 shown in FIG. 6 performs the method. For ease of description, the following uses an example in which an execution body is a data processing apparatus for description. The data processing apparatus may be replaced with another apparatus, module, or device.

The data processing method shown in FIG. 13 may include step S1301 and step S1302. It should be understood that, for ease of description, a sequence of S1301 and S1302 is used for description herein, but this is not intended to constitute a limitation that the method is necessarily performed in the foregoing sequence. An execution sequence, execution time, a quantity of execution times, and the like of the foregoing one or more steps are not limited in embodiments of this application. S1301 and S1302 are specifically as follows:
Step S1301: A data processing apparatus obtains first detection data.

The data processing apparatus is an apparatus having a computing capability. For example, the data processing apparatus is, for example, the calculation module 15 in the foregoing detection apparatus 100. The first detection data may be obtained by a first receiving module of the detection apparatus. With reference to the foregoing description, the first emitting module 11 generates the first emitted light beam at the first moment, the scanning module 13 reflects the first emitted light beam at the first scanning angle to form the first reflected light beam, and the first receiving module 14 receives the first reflected light beam and obtains the first detection data. The first detection data indicates the first scanning angle and the first moment. For a related description, refer to the related description of the first detection data.

For example, the data processing apparatus is connected to the first receiving module, and may receive, via a connection line between the data processing apparatus and the first receiving module, the first detection data sent (or output) by the first receiving module 14. Alternatively, the data processing apparatus may be fully integrated or partially integrated into the first receiving module 14, and the photoelectric conversion element of the first receiving module 14 may provide the first detection data to the data processing apparatus.

Step S1302: The data processing apparatus controls, based on at least the first detection data, a second emitting module to generate a detection light beam at a second moment.

The second emitting module is a module configured to emit the detection light beam, and the detection light beam is emitted to the object space through the scanning module. The second moment is related to the first moment and the first scanning angle. It may be understood that, when the scanning module is at a first scanning angle, a light beam emitted by the first emitting module may be received by the first receiving module after being reflected by the scanning module. Therefore, the first detection data can indicate the first scanning angle and a moment at which a first reflected light beam is received, to precisely determine an angle value of the scanning module. An occasion for emitting the detection light beam by the second emitting module can be controlled based on the angle value of the scanning module, so that an angle corresponding to the emitted light beam is controllable, thereby improving angle accuracy of the detection apparatus.

For example, the first detection data is amplitude data shown in FIG. 3. The data processing apparatus includes a comparator, which may obtain the pulse signal shown in FIG. 4 based on an amplitude value and a detection threshold. A pulse of the pulse signal may indicate a moment, and also indicate an angle of the scanning module.

In some possible implementations, the data processing apparatus determines a first frame signal based on the first detection data, and controls, based on the first frame signal, the second emitting module to generate the detection light beam at the second moment. The data processing apparatus generates the first frame signal based on the first detection data. The first frame signal indicates the first detection frame, and the second moment is located in the first detection frame. Because the detection data reflects an angle of the scanning module at a specific moment, the data processing apparatus may determine, based on the detection data, a time period in which detection may be performed (namely, the first detection frame), and control time at which the second emitting module emits light.

In some possible implementations, the data processing apparatus obtains a first indication signal based on the first detection data, updates a level of the first frame signal based on the first indication signal, and controls, based on the first frame signal, the second emitting module to send the detection light beam in the first detection frame. With reference to FIG. 3, FIG. 4, and FIG. 5, the first indication signal changes to a first level at a first time location, and the first time location corresponds to the first moment and the first scanning angle. The first frame signal indicates the first detection frame, and the second moment is located in the first detection frame. For example, with reference to FIG. 4 and FIG. 5, the first indication signal is at a rising edge at the moment *t*₁. Therefore, the first frame signal is also at a rising edge at the moment *t*₁, and the level of the first frame signal changes, to indicate that the first detection frame starts.

Optionally, in the first detection frame, an angle through which the detection light beam scans is the FOV of the detection apparatus. For a related description and a possible design, refer to the foregoing description.

Optionally, an amplitude value of the first detection data is correlated with intensity of light energy received by the first receiving module. Refer to FIG. 3. When the amplitude value of the first detection data is greater than or equal to a first preset value, the first indication signal is at the first level. The first preset value is the detection threshold, and is used to obtain the pulse signal.

In some possible implementations, the detection apparatus further includes a second receiving module. With reference to FIG. 6, the first emitting module may further generate the second emitted light beam at the third moment. The scanning module reflects the second emitted light beam at the third scanning angle to form the second reflected light beam, and the second receiving module may receive the second reflected light beam and obtain the second detection data. In this case, the data processing apparatus may obtain the second detection data, and control, based on the second detection data, the second emitting module not to generate a detection light beam at the fourth moment. The second detection data indicates the third moment and the third scanning angle, and the fourth moment is related to the third moment and the second scanning angle.

With reference to FIG. 8, the data processing apparatus obtains the second indication signal based on the second detection data, and updates the level of the first frame signal based on the second indication signal to end the first detection frame. The second indication signal changes to a second level at a second time location, and the second time location corresponds to the third moment and the third scanning angle.

In some possible implementations, the data processing apparatus determines the first subframe signal based on the first frame signal, and controls the second emitting module to emit the detection light beam in the first subframe. The first subframe signal indicates the first subframe in the first detection frame, and the second moment is located in the first subframe. Optionally, in the first detection frame, the first subframe may be generated according to time, as shown in FIG. 9. For related descriptions, refer to the foregoing description.

In a possible implementation, the detection apparatus further includes an angle encoder, and the angle encoder is configured to obtain angle detection data of the scanning module. The data processing apparatus may detect, based on the angle detection data, whether the angle encoder is contaminated (that is, whether the data of the angle encoder is accurate). Further, when it is detected that the angle encoder is contaminated, the data processing apparatus obtains the first detection frame based on the first detection data (optionally, including the second detection data), and emits the detection light beam for detection in the first detection frame.

In some solutions, the data processing apparatus may determine, based on the angle detection data from the angle encoder, a second detection frame signal, and the second detection frame signal indicates a second detection frame. Further, the data processing apparatus determines a final detection frame signal based on the second detection frame signal and the first detection frame signal, to indicate an occasion for performing detection. When it is detected that the angle encoder is contaminated, the data processing apparatus uses the first detection frame signal as the final detection frame signal, and controls a light emission occasion of the second emitting module, or controls the light emission occasion of the second emitting module and a reception occasion of the third receiving module.

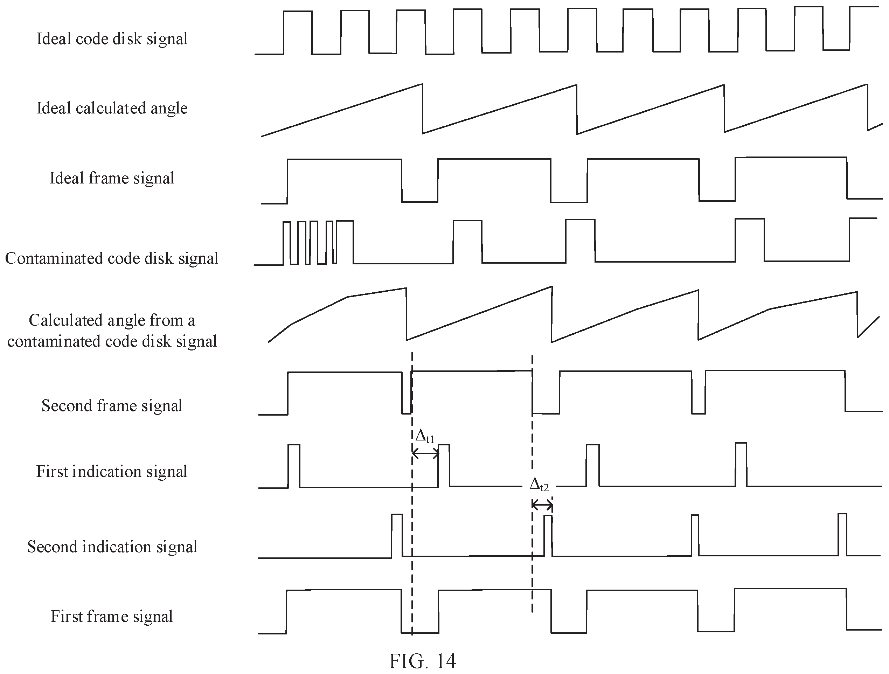

FIG. 14 is a timing diagram of several signals according to this application. The optical angle encoder is used as an example. With reference to FIG. 14, in an ideal case (that is, when not contaminated), pulse signals obtained based on the code disk (referred to as code disk signals) are uniformly distributed in time. An angular change of the scanning module may be accurately reflected based on the code disk signal. For example, the angle of the scanning module (namely, an ideal calculated angle) may be calculated based on the code disk signal. Based on the code disk signal in the ideal case, a frame signal used for controlling a detection process in the ideal case (namely, an ideal frame signal) can be obtained. However, when the angle encoder is contaminated, the pulse signal obtained based on the code disk changes, for example, non-uniform, densely distributed, and short-duration pulses appear. Based on the contaminated code disk signal, the calculated angle of the scanning module is no longer accurate, and the frame signal obtained based on the contaminated code disk signal (namely, the second frame signal) cannot accurately indicate a time period in which detection needs to be performed, which affects detection performance. For example, if a current angle of a scanner is the first scanning angle, in an ideal case, a signal should be generated and scanning should be performed towards the object space. However, because the frame signal is contaminated and remains at a low level at this time, the detection apparatus cannot emit the detection light beam in time, and consequently, an emission signal at this angle is lost, and a receiver cannot receive a return signal at this angle.

In the foregoing implementation, when it is detected that the angle encoder is contaminated, the first indication signal and the second indication signal can accurately indicate a scanning angle of the scanning module and a moment at which the scanning module is at the scanning angle. Therefore, the data processing apparatus can control, based on the first frame signal obtained from the first indication signal and the second indication signal, a time period in which the detection apparatus performs detection.

In a possible implementation, it may be detected whether the angle encoder is contaminated with reference to the angle detection data, the first indication signal, and the second indication signal. When it is detected that the angle encoder is contaminated, time during which the detection apparatus needs to perform detection is controlled based on the first detection data (optionally, including the second detection data). For example, when a first time difference (for example, Δₜ₁ shown in FIG. 14) between a rising edge of the second frame signal (the frame signal generated from the code disk angle) and a rising edge of the first indication signal is greater than or greater than or equal to a first time difference threshold (for example, represented as TH1), the angle encoder is contaminated. In this case, the detection apparatus 100 uses the first frame signal as a frame signal for controlling the detection process. Alternatively, when a second time difference (for example, Δₜ₂ shown in FIG. 14) between a falling edge of the second frame signal (the frame signal generated from the code disk angle) and a falling edge of the second indication signal is greater than or greater than or equal to a second time difference threshold (for example, represented as TH2), it indicates that the angle encoder is contaminated. In this case, the detection apparatus 100 uses the first frame signal as the frame signal for controlling the detection process. The foregoing time difference may be replaced with an absolute value of the time difference. Optionally, when the foregoing condition is not satisfied, the detection apparatus 100 uses the second frame signal as the frame signal for controlling the detection process. Optionally, the first time difference threshold TH1 and the second time difference threshold TH2 may be predefined or obtained through calculation.

As mentioned above, when the detection apparatus emits a light beam, the light emission time can be specifically controlled by a subframe signal. In some solutions, the data processing apparatus may determine a second subframe signal based on the second frame signal, and the second subframe signal may indicate a second subframe. The second subframe is some time periods in the second detection frame, and one second detection frame may include a plurality of second subframes. In some solutions, the second subframe signal is generated based on the second frame signal and according to the scanning angle of the scanning module. Optionally, in one second detection frame, scanning angle widths corresponding to the plurality of second subframes are the same, or scanning angle widths corresponding to the plurality of second subframes are predefined.

Optionally, the data processing apparatus determines a final subframe signal based on the first subframe signal and the second subframe signal, to indicate a subframe to be actually used. For example, when it is detected that the angle encoder is contaminated, the data processing apparatus uses the first subframe signal as the final subframe signal, and controls the light emission occasion of the second emitting module, or controls the light emission occasion of the second emitting module and the reception occasion of the third receiving module.

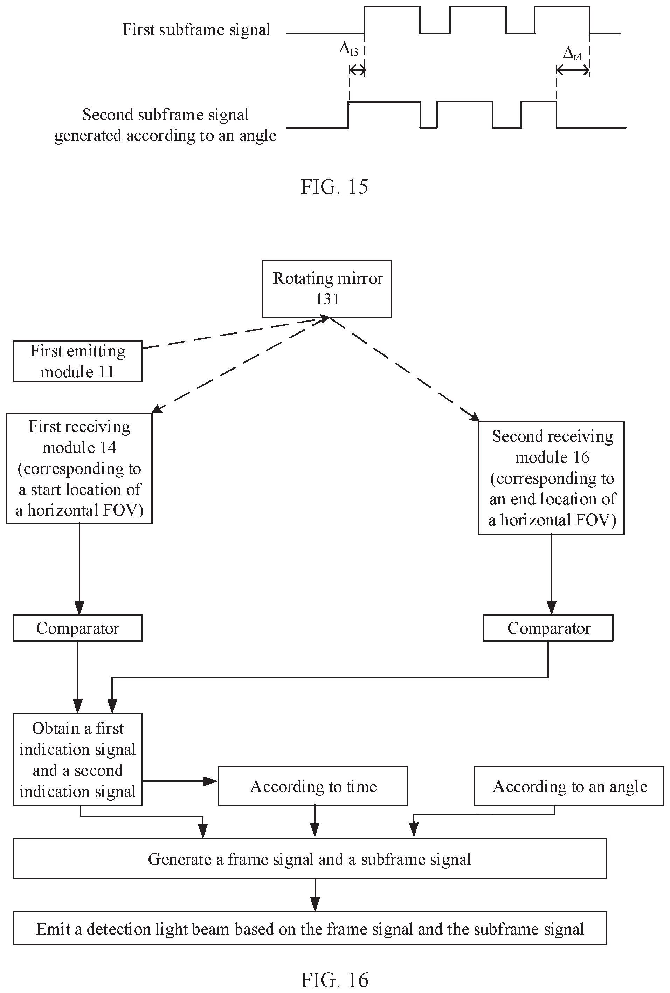

FIG. 15 is a timing diagram of several other signals according to an embodiment of this application. The first subframe signal is a subframe signal generated based on the first frame signal according to time, and the second subframe signal is a subframe signal generated based on the second frame signal according to an angle. When a third time difference (for example, Δₜ₃ shown in FIG. 15) between a rising edge of the first subframe signal and a rising edge of the second subframe signal is greater than or equal to a third time difference threshold (for example, represented as TH3), or when a fourth time difference (for example, Δₜ₄ shown in FIG. 15) between a falling edge of the first subframe signal and a falling edge of the second subframe signal is greater than or greater than or equal to a fourth time difference threshold (for example, represented as TH4), the first subframe signal is used as the subframe signal for controlling the detection process. Optionally, when the foregoing condition is not satisfied, the second subframe signal is used as the frame signal for controlling the detection process. Optionally, the third time difference threshold TH3 and the fourth time difference threshold TH4 may be predefined or obtained through calculation.

In the data processing method shown in FIG. 13, the detection apparatus is provided with the first emitting module and the first receiving module for detecting the scanning module. When the scanning module is at the first scanning angle, a light beam emitted by the first emitting module may be received by the first receiving module after being reflected by the scanning module. Therefore, the detection data obtained by the first receiving module can indicate the first scanning angle, and the detection data also indicates the moment at which the first reflected light beam is received. The data processing apparatus can precisely determine the angle value of the scanning module based on the detection data obtained by the first receiving module, thereby controlling the occasion for emitting the detection light beam by the second emitting module, so that the angle corresponding to the emitted light beam is controllable, and angle accuracy of the detection apparatus during detection is improved.

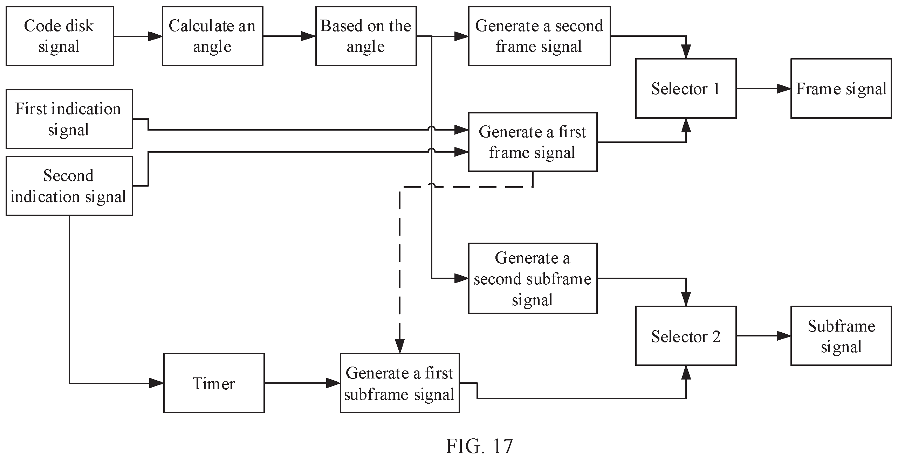

The foregoing provides an apparatus in this application and a related data processing method. The foregoing describes a plurality of possible implementations. The following describes an example of a specific implementation of this application with reference to FIG. 16 and FIG. 17.

FIG. 16 is a diagram of a detection process according to an embodiment of this application. A detection apparatus includes a rotating mirror 131 (considered as the foregoing scanning module 13), the first emitting module 11, the first receiving module 14, and the second receiving module 16. A location for disposing the first receiving module 14 corresponds to a start location of a horizontal FOV. In other words, when the first receiving module 14 receives a light beam from the first emitting module 11, a current scanning angle of the rotating mirror 131 is considered to be the start location of the horizontal FOV. A location for disposing the second receiving module 16 corresponds to an end location of the horizontal FOV. Detection data obtained by the first receiving module 14 and detection data obtained by the second receiving module 16 may pass through a comparator to respectively obtain the first indication signal and the second indication signal.

The data processing apparatus may obtain a frame signal and a subframe signal based on the first indication signal and the second indication signal. In some solutions, the first indication signal and the second indication signal may be used to determine the first frame signal, and the first frame signal may serve as the frame signal. Further, the data processing apparatus may generate the first subframe signal based on the first frame signal. The first subframe signal may be generated according to time, and the first subframe signal may serve as the subframe signal.

In some solutions, the detection apparatus further includes an angle encoder. The angle encoder is mounted on the scanning module. When the scanning module moves, the angle encoder obtains angle detection data. For example, the angle detection data may be the code disk signal shown in FIG. 14, or the angle detection data may be processed to obtain the code disk signal shown in FIG. 14. The data processing apparatus may obtain the frame signal and the subframe signal based on the first indication signal, the second indication signal, and the angle detection data from the angle encoder. Specifically, the data processing apparatus may obtain the first frame signal based on the first indication signal and the second indication signal, and may generate the first subframe signal based on the first indication signal and the second indication signal according to time. The data processing apparatus may obtain the second frame signal based on the data from the angle encoder, and may obtain the second subframe signal based on the data from the angle encoder according to an angle. A final frame signal may be determined based on the first frame signal and the second frame signal, and a final subframe signal may be determined based on the first subframe signal and the second subframe signal. For example, when the detection apparatus detects that the angle encoder is contaminated, the first frame signal and the first subframe signal obtained based on the detection data from the first receiving module and the second receiving module are used as the frame signal and the subframe signal for controlling the detection process.

Optionally, the first subframe signal may be obtained based on the first frame signal and time. Similarly, the second subframe signal may be obtained based on the second frame signal and an angle. Certainly, this application is also applicable to a case in which the first subframe signal is directly generated based on the first indication signal, the second indication signal, and the time, and the second subframe signal is directly generated based on the data from the angle encoder.

For ease of understanding, with reference to FIG. 17, the following describes a process of obtaining a frame signal and a subframe signal by a detection apparatus including an angle encoder. The process mainly includes a frame signal generation process and a subframe signal generation process.

In the frame signal generation process, as shown in FIG. 17, the data processing apparatus may calculate an angle of the scanning module based on the code disk signal, and obtain a second frame signal (referred to as frame_sync_2 for ease of distinction) based on the angle. The second frame signal may indicate a second detection frame. In a plurality of second detection frames in a period of time, angle widths through which the scanning module moves may be the same or may be different (for example, a pre-designed angle). In addition, the data processing apparatus respectively obtains a first indication signal and a second indication signal based on detection data from the first receiving module and detection data from the second receiving module, which are respectively referred to as a start of scan signal and a stop of scan signal for ease of distinction. A first frame signal (referred to as frame_sync_1 for ease of distinction) may be generated based on the first indication signal and the second indication signal. When the angle encoder operates normally, the data processing apparatus selects the second frame signal as the frame signal (for example, a selection process is performed by a selector 1). When it is detected that the angle encoder is contaminated, the first frame signal is selected as the frame signal.

For example, a selection condition of the selector 1 is as follows: when an absolute value of a first time difference between a rising edge of the second frame signal generated from a code disk angle and a rising edge of the first indication signal is greater than the first time threshold TH1, or an absolute value of a second time difference between a falling edge of the second frame signal generated from the code disk angle and a falling edge of the second indication signal is greater than the second time threshold TH2, the selector 1 selects the first frame signal as an output frame signal. When the condition is not satisfied, the second frame signal is selected as the output frame signal.

In the subframe signal generation process, the second subframe signal is generated based on the code disk signal according to an angle. The second subframe signal indicates a plurality of second subframes. Angles corresponding to the plurality of second subframes may be equal angles, or angles corresponding to the plurality of second subframes may be different. The first subframe signal is generated based on the first indication signal and the second indication signal according to time. The first subframe signal indicates a plurality of first subframes, and time of the plurality of first subframes may be the same or different. When the angle encoder operates normally, the data processing apparatus selects the second subframe signal as the subframe signal (a selection operation is performed by, for example, a selector 2). When it is detected that the angle encoder is contaminated, the first subframe signal is selected as the subframe signal.

For example, the selection condition of the selector 1 is as follows: when an absolute value of a time difference between a rising edge of the first subframe signal and a rising edge of the second subframe signal exceeds the third time threshold TH3, or an absolute value of a time difference between a falling edge of the first subframe signal and a falling edge of the second subframe signal is greater than the fourth time threshold TH4, the first subframe signal is selected as the subframe signal. When the condition is not satisfied, the second subframe signal is selected as the subframe signal.

The foregoing describes in detail the method in embodiments of this application, and provides some possible implementations. The following describes some apparatuses for implementing the foregoing method. It should be understood that division into units in the apparatus provided in embodiments of this application is merely logical function division. During actual implementation, all or a part of the units may be integrated into one physical entity, or may be physically separated.

In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units in the apparatus. The processor is, for example, a general-purpose processor, such as a central processing unit (central processing unit, CPU) or a microprocessor, and the memory is a memory in the apparatus or a memory outside the apparatus.

Alternatively, the units in the apparatus may be implemented in a form of a hardware circuit, and the hardware circuit may be designed to implement functions of a part or all of the units. The hardware circuit may be understood as one or more processors. For example, in an implementation, the hardware circuit is an application-specific integrated circuit (application-specific integrated circuit, ASIC), and a logical relationship between elements in the circuit is designed to implement functions of a part or all of the units. For another example, in another implementation, the hardware circuit may be implemented by using a programmable logic device (programmable logic device, PLD). A field programmable gate array (field programmable gate array, FPGA) is used as an example. The hardware circuit may include a large quantity of logic gate circuits, and a connection relationship between the logic gate circuits is configured by using a profile, to implement functions of a part or all of the units. All the units of the apparatus may be implemented in the form of software invoked by the processor, or may be implemented in the form of hardware circuit, or a part of the units are implemented in the form of software invoked by the processor, and remaining units are implemented in the form of hardware circuit.

In embodiments of this application, the processor is a circuit having a signal processing capability. In an implementation, the processor may be a circuit capable of reading and executing instructions, for example, a central processing unit (central processing unit, CPU) or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit, such as an FPGA, implemented by using an application-specific integrated circuit (application-specific integrated circuit, ASIC) or a programmable logic device (programmable logic device, PLD). In the reconfigurable hardware circuit, a process in which the processor loads a configuration document to implement configuration of the hardware circuit may be understood as a process in which the processor loads instructions to implement functions of a part or all of the units. It can be learned that each unit of the apparatus may be one or more processors (or processing circuits) configured to implement the foregoing method, for example, a CPU, a GPU, a microprocessor, a DSP, an ASIC, an FPGA, or a combination of at least two of these processor forms.

In addition, all or a part of the units of the apparatus may be integrated, or may be implemented independently. In an implementation, these units are integrated together and implemented in a form of system-on-a-chip (system-on-a-chip, SoC). The SOC may include at least one processor, configured to implement any one of the methods or implement functions of the units of the apparatus. Types of the at least one processor may be different, for example, the at least one processor includes a CPU and an FPGA.

The following lists several possible apparatuses.

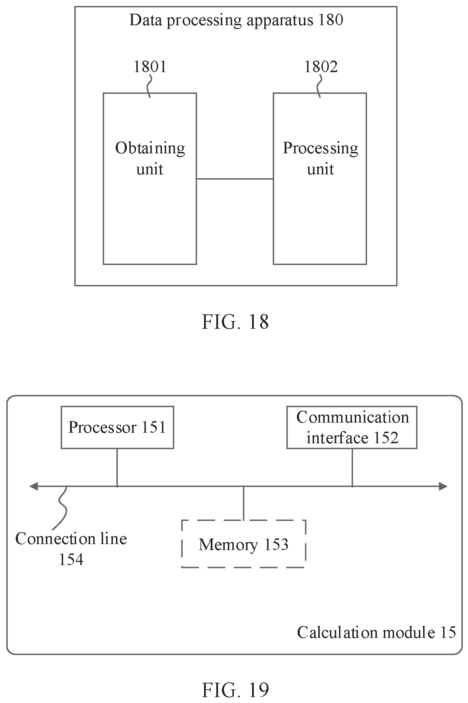

FIG. 18 is a diagram of a structure of a data processing apparatus according to an embodiment of this application, namely, a data processing apparatus 180. Optionally, the data processing apparatus 180 may be an independent device. For example, the data processing apparatus 180 may be the calculation module 15 shown in FIG. 6. Alternatively, the data processing apparatus 180 may be a component, for example, a chip or an integrated circuit in an independent device (for example, a node). The data processing apparatus 180 is configured to implement the foregoing data processing method.

As shown in FIG. 18, the data processing apparatus 180 includes an obtaining unit 1801 and a processing unit 1802. The obtaining unit 1801 is configured to perform one or more operations such as obtaining, receiving, listening, and transmitting, and further includes another operation for implementing a data processing method. The processing unit 1802 is configured to perform one or more operations such as processing, calculating, determining, generating, and updating, and further includes another operation for implementing the data processing method.

For related descriptions, refer to the descriptions of the embodiment shown in FIG. 13. Details are not described herein again.

FIG. 19 is a diagram of a structure of a calculation module according to an embodiment of this application. The calculation module 15 may be an independent device, or may be a component included in an independent device, for example, a chip, a software module, or an integrated circuit. The calculation module 15 may include at least one processor 151 and a communication interface 152. Optionally, the calculation module 15 may further include at least one memory 153. Further, optionally, the calculation module 15 may further include a connection line 154. The processor 151, the communication interface 152, and/or the memory 153 are connected through the connection line 154, and/or communicate with each other through the connection line 154, to transfer a control signal and/or a data signal.

Specifically:
The processor 151 is a module for performing an arithmetic operation and/or a logical operation, and may specifically include one or more of the following modules: a filter, a modem, a power amplifier, a low noise amplifier (low noise amplifier, LNA), a baseband processor, a radio frequency processor, a radio frequency circuit, a central processing unit (central processing unit, CPU), an application processor (application processor, AP), a microcontroller unit (microcontroller unit, MCU), an electronic control unit (electronic control unit, ECU), a graphics processing unit (graphics processing unit, GPU), a microprocessor unit (microprocessor unit, MPU), an application-specific integrated circuit (application-specific integrated circuit, ASIC), an image signal processor (image signal processor, ISP), a digital signal processor (digital signal processor, DSP), a field programmable gate array (field programmable gate array, FPGA), a complex programmable logic device (complex programmable logic device, CPLD), a coprocessor, or the like.

The communication interface 152 may be configured to provide information input or output to the at least one processor, or configured to receive a signal sent from the outside and/or send a signal to the outside.

For example, the communication interface 152 may include an interface circuit. For example, the communication interface 152 may include a wired link interface like a bus, or may be a wireless link (Wi-Fi, Bluetooth, universal wireless transmission, an in-vehicle short-range communication technology, or another short-range wireless communication technology) interface. In a possible design, if the calculation module 15 is an independent device, the communication interface 152 may include a receiver and a transmitter. The receiver and the transmitter may be a same component or different components. When the receiver and the transmitter are a same component, the component may be referred to as a transceiver. In another possible design, if the calculation module 15 is a chip or a circuit, the communication interface 152 may include an input interface and an output interface, and the input interface and the output interface may be a same interface or different interfaces.

Optionally, a function of the communication interface 152 may be implemented via a transceiver circuit or a dedicated transceiver chip.

The memory 153 is configured to provide storage space, and the storage space may store data such as an operating system and a computer program. The memory 153 may be one or a combination of a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like.

Functions and actions of the modules or the units in the calculation module 15 listed above are merely examples for description.

Functional units in the calculation module 15 may be configured to implement the foregoing data processing method, for example, the data processing method shown in FIG. 13. Optionally, when the calculation module 15 includes the at least one memory 153, if the processor 151 invokes a computer program to implement the foregoing data processing method, the computer program may be stored in the memory 153.

This application further provides a lidar, and the lidar includes the foregoing detection apparatus (for example, the detection apparatus 100). The detection apparatus includes a calculation module, and the calculation module is configured to implement the foregoing data processing method, for example, the data processing method shown in FIG. 13.

This application further provides a terminal, including the foregoing detection apparatus (for example, the detection apparatus 100), or the foregoing data processing apparatus (for example, the data processing apparatus 180), or the foregoing calculation module 15, or the foregoing lidar.

In embodiments of this application, the term "example", "for example", or the like is used to represent giving an example, an illustration, or a description. Any embodiment or design scheme described as an "example" or "for example" in this application should not be explained as being more preferred or having more advantages than another embodiment or design scheme. Exactly, use of the word "example" or "for example" is intended to present a related concept in a specific manner.

In embodiments of this application, "at least one" means one or more, and "a plurality of" means two or more. "At least one of the following items (pieces)" or a similar expression thereof means any combination of these items, including any combination of singular items (pieces) or plural items (pieces). For example, at least one of a, b, or c may indicate: a, b, c, (a and b), (a and c), (b and c), or (a, b, and c), where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are for differentiation between a plurality of objects, but are not intended to limit an order, a time sequence, priorities, or importance of the plurality of objects.

## Claims

1. A detection apparatus, wherein the detection apparatus comprises a first emitting module, a second emitting module, a scanning module, and a first receiving module, wherein
the first emitting module is configured to generate a first emitted light beam at a first moment;
the scanning module is configured to reflect the first emitted light beam at a first scanning angle, to form a first reflected light beam;
the first receiving module is configured to receive the first reflected light beam and obtain first detection data, wherein the first detection data indicates the first scanning angle;
the second emitting module is configured to generate a detection light beam at a second moment, wherein the second moment is related to the first moment and the first scanning angle; and
the scanning module is further configured to reflect the detection light beam to object space, to detect the object space.

2. The detection apparatus according to claim 1, wherein the detection apparatus further comprises a calculation module, and the calculation module is configured to:
obtain a first indication signal based on the first detection data, wherein the first indication signal changes to a first level at a first time location, and the first time location corresponds to the first moment and the first scanning angle; and
update a level of a first frame signal based on the first indication signal, wherein the first frame signal indicates a first detection frame; and
the second emitting module is further configured to send the detection light beam in the first detection frame, wherein the second moment is located in the first detection frame.

3. The detection apparatus according to claim 2, wherein in the first detection frame, an angle through which the detection light beam scans is a field of view FOV of the detection apparatus.

4. The detection apparatus according to claim 2 or 3, wherein an amplitude value of the first detection data is positively correlated with intensity of light energy received by the first receiving module; and
the first indication signal is at the first level when the amplitude value of the first detection data is greater than or equal to a first preset value.

5. The detection apparatus according to any one of claims 2 to 4, wherein the detection apparatus further comprises a second receiving module;
the first emitting module is further configured to generate a second emitted light beam at a third moment;
the scanning module is further configured to reflect the second emitted light beam at a third scanning angle, to form a second reflected light beam;
the second receiving module is configured to receive the second reflected light beam and obtain second detection data, wherein the second detection data indicates the second scanning angle; and
the second emitting module stops generating the detection light beam at a fourth moment, wherein the fourth moment is related to the third moment and the second scanning angle.

6. The detection apparatus according to claim 5, wherein the calculation module is further configured to:
obtain a second indication signal based on the second detection data, wherein the second indication signal changes to a second level at a second time location, and the second time location corresponds to the third moment and the second scanning angle; and
update the level of the first frame signal based on the second indication signal to end the first detection frame.

7. The detection apparatus according to claim 5 or 6, wherein in a movement direction of the scanning module, a principal optical axis of the first receiving module and a principal optical axis of the second receiving module form a first included angle; and
the first included angle is the same as or corresponds to the field of view FOV of the detection apparatus.

8. The detection apparatus according to any one of claims 2 to 7, wherein
the calculation module is further configured to determine a first subframe signal based on the first frame signal, wherein the first subframe signal indicates a first subframe in the first detection frame; and
the second emitting module is further configured to emit the detection light beam in the first subframe, wherein the second moment is located in the first subframe.

9. The detection apparatus according to claim 8, wherein in the first subframe, an angle through which the detection light beam scans is a subregion of the FOV of the detection apparatus.

10. The detection apparatus according to claim 8 or 9, wherein the first detection frame comprises a plurality of first subframes, and scanning duration of detection light beams corresponding to the plurality of first subframes is the same, or scanning duration of detection light beams corresponding to the plurality of first subframes is predefined.

11. The detection apparatus according to any one of claims 2 to 10, wherein the first emitting module and the first receiving module share an optical lens, or the first emitting module and the second receiving module share an optical lens.

12. The detection apparatus according to any one of claims 1 to 11, wherein the detection apparatus further comprises an angle encoder, and the angle encoder is configured to obtain angle detection data of the scanning module; and
the calculation module in the detection apparatus is further configured to determine, based on the angle detection data, that the angle encoder is contaminated.

13. The detection apparatus according to any one of claims 1 to 12, wherein the scanning module comprises at least two scanning surfaces; and
a scanning surface corresponding to the first emitting module is the same as a scanning surface corresponding to the second emitting module, or a scanning surface corresponding to the first emitting module is different from a scanning surface corresponding to the second emitting module.

14. The detection apparatus according to any one of claims 1 to 13, wherein a wavelength of a light beam emitted by the first emitting module is different from a wavelength of a light beam emitted by the second emitting module.

15. The detection apparatus according to any one of claims 1 to 14, wherein the detection apparatus further comprises a third receiving module;
the scanning module is further configured to provide, to the third receiving module, a return light beam from the object space, wherein the return light beam comprises an echo of the detection light beam; and
the third receiving module is configured to receive the return light beam and obtain detection data of the object space.

16. The detection apparatus according to any one of claims 1 to 15, wherein the scanning module comprises one or more of a rotating mirror, an oscillating mirror, or a galvanometer mirror.

17. A terminal, wherein the terminal comprises the detection apparatus according to any one of claims 1 to 16.
